# DEMANDE DE BREVET EUROPEEN

(11) **EP 3 418 987 A1**
(43) Date de publication de la demande: **26.12.2018**
(21) Numéro de dépôt: 18179103.9
(22) Date de dépôt: 21.06.2018
(51) Int. Cl.: G07F 17/24, G08B 25/12

(54) **BORNE DE PAIEMENT ET SYSTÈME DE GESTION D'UN PRODUIT ET/OU D'UN SERVICE ASSOCIÉ**

(30) Priorité: 21.06.2017 FR 1755665
(71) Demandeur: Parkeon, 75015 Paris (FR)
(72) Inventeur: MOLÉ, Julien, 39600 ARBOIS (FR); LAGNIE, David, 24510 OSSELLE-ROUTELLE (FR); MAUREL, Alexandre, 25000 BESANCON (FR); MARTINEZ, Franck, 25170 EMAGNY (FR)
(74) Mandataire: Lavoix

(57) **Abrégé**

La borne de paiement est disposée en voirie et utilisable en libre-service pour l'achat d'un produit et/ou d'un service. La borne de paiement est configurée pour être reliée à un système informatique distant relié à plusieurs bornes de paiement analogues d'un système de gestion d'un produit et/ou d'un service. La borne de paiement comprend un système d'alerte configuré pour permettre à un piéton de générer un message d'alerte, la borne de paiement étant configurée pour envoyer le message d'alerte au système informatique.

## Description

La présente invention concerne le domaine des bornes de paiement situées dans l'espace public et en accès libre pour la vente d'un produit et/ou d'un service.

FR 2 968 814 A1 divulgue un horodateur de stationnement configuré pour fournir un service payant d'envoi d'un message de type SMS (de l'anglais Short Message System), MMS (de l'anglais Multimédia Messaging Service) ou courriel, le message étant éventuellement accompagné d'une image, d'une vidéo ou d'un contenu sonore capturé par un dispositif de capture de l'horodateur de stationnement ou reçu par l'horodateur de stationnement par l'intermédiaire d'un dispositif de communication à courte distance de l'horodateur de stationnement.

Un des buts de l'invention est de proposer une borne de paiement offrant une fonctionnalité supplémentaire.

A cet effet, l'invention propose une borne de paiement disposée en voirie et utilisable en libre-service pour l'achat d'un produit et/ou d'un service, la borne de paiement étant configurée pour être reliée à un système informatique distant relié à plusieurs bornes de paiement analogues d'un système de gestion d'un produit et/ou d'un service, la borne de paiement comprenant un système d'alerte configuré pour permettre à un piéton de générer un message d'alerte, la borne de paiement étant configurée pour envoyer le message d'alerte au système informatique.

Une borne de paiement disposée en voirie peut fournir un support avantageux pour un système d'alerte, notamment du fait qu'une borne de paiement est alimentée en énergie, qu'elle est en communication avec un système informatique distant pour les besoins de la vente du produit et/ou du service, et que la borne de paiement fait partie d'un réseau de bornes de paiement réparties sur la voirie. En particulier, les bornes de paiement délivrant des tickets de stationnement représentent un réseau relativement dense, notamment en ville. Les bornes de paiements sont donc rapidement accessibles. Un message d'alerte est relatif par exemple à un incident ou un accident de circulation, une agression, un incendie... et de manière générale tout évènement pouvant nécessiter l'intervention de la sécurité civile (police, secours...).

Dans des modes de réalisation particuliers, la borne de paiement peut comprendre une ou plusieurs des caractéristiques suivantes, prises isolément ou selon toutes les combinaisons techniquement possible :
- le système d'alerte comprend un organe d'alerte actionnable manuellement par un piéton pour générer un message d'alerte ;
- le système d'alerte comprend un écran tactile utilisable par un piéton pour générer un message d'alerte ;
- le système d'alerte comprend un dispositif de capture propre à capturer des sons, la borne de paiement étant configurée pour attacher un contenu audio au message d'alerte et/ou pour établir une communication audio avec un opérateur distant ;
- le système d'alerte comprend un dispositif de capture propre à capturer des images, la borne de paiement étant configurée pour attacher un contenu vidéo au message d'alerte et/ou pour établir une communication vidéo avec un opérateur distant ;
- le système d'alerte comprend un module de biométrie, la borne de paiement étant configurée pour déterminer des données biométriques, et pour attacher des données biométriques au message d'alerte et/pour identifier un piéton utilisant le système d'alerte ;
- la borne de paiement comprend un générateur de signal configuré pour l'émission d'un signal d'alerte visuel, sonore et/ou olfactif perceptible par des piétons et/ou des passagers de véhicules à proximité de la borne de paiement ;
- la borne de paiement comprend un dispositif communication configuré pour la diffusion du message d'alerte vers des appareils électroniques de piétons, de passagers de véhicules et/ou de véhicules situés à proximité de la borne de paiement, via une liaison de communication radio ou optique.

L'invention concerne aussi un système de gestion d'un produit et/ou d'un service, comprenant une pluralité de bornes de paiement, chaque borne de paiement étant telle que définie plus haut, un système informatique en communication avec chaque borne de paiement, le système informatique étant configuré pour diffuser chaque message d'alerte envoyé par une borne de paiement vers un ou plusieurs destinataire(s) prédéterminé(s).

Dans un mode de réalisation, le ou les destinataire(s) prédéterminé(s) est ou comprennent : un ou plusieurs fournisseurs de données de trafic routier, une ou plusieurs organisme de sécurité civile et/ou une ou plusieurs borne(s) de paiement parmi les autres bornes de paiement du système de gestion.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique d'ensemble d'un système de gestion de produit et/ou de service comprenant une pluralité de bornes de paiement accessibles en libre-service et disposées sur la voirie ;
- la Figure 2 est un organigramme illustrant des étapes d'un procédé de diffusion d'un message d'alerte mis en oeuvre à l'aide du système de gestion de la Figure 1.

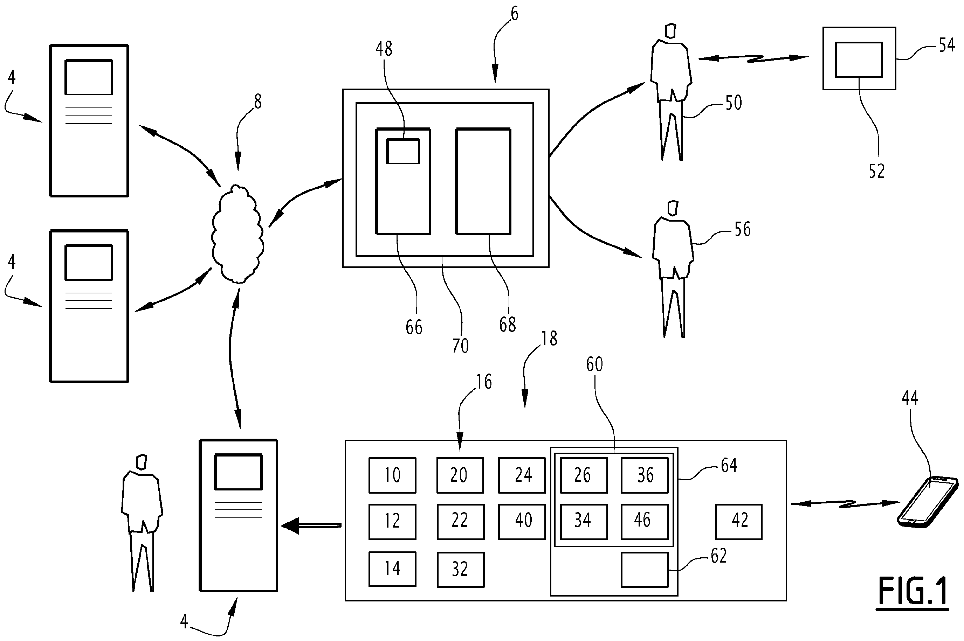

Tel qu'illustré sur la Figure 1, le système de gestion 2 de produit et/ou de service est configuré pour permettre à des utilisateurs d'acheter un produit et/ou un service par l'intermédiaire d'une pluralité de bornes de paiement 4 accessibles en libre-service et disposées sur la voirie.

Le système de gestion 2 comprend un système informatique 6 central en communication avec chacune des bornes de paiement 4 par l'intermédiaire d'un réseau de communication 8.

Dans la présente description, un « utilisateur » désigne une personne utilisant une borne de paiement 4 du système de gestion 2 pour l'achat d'un produit et/ou d'un service, tandis qu'un « piéton » ou un « passant » désigne une personne n'utilisant pas de borne de paiement 4 pour l'achat d'un produit et/ou d'un service, mais pouvant se situer sur la voirie à proximité de la borne de paiement 4.

Par ailleurs, la « voirie » comprend, d'une part, la chaussée, réservée à la circulation des voitures, et, d'autre part, les espaces piétons (trottoirs et places...) réservés à la circulation des piétons.

Dans l'exemple illustré, chaque borne de paiement 4 est un horodateur de stationnement, configuré pour délivrer des titres de stationnement, autorisant l'utilisateur à stationner son véhicule sur une place de stationnement. En variante, chaque borne de paiement 4 est configurée pour délivrer des titres de transport permettant d'utiliser des transports en commun (bus, métro, tramway, train...).

Le réseau de communication 8 est un réseau de communication avec fil ou sans fil. Le réseau de communication 8 est par exemple un réseau téléphonique filaire, un réseau téléphonique mobile (GSM, UMTS, LTE...), un réseau informatique (LAN, WAN), le réseau Internet, un réseau local (Wifi, Bluetooth, Lora, Li-Fi, Zigbee, Z-Wave, Dust, ANT+, NFC...)...

Les bornes de paiement 4 sont analogues.

Chaque borne de paiement 4 comprend un dispositif d'interface homme-machine 10 permettant à l'utilisateur d'interagir avec la borne de paiement 4 pour l'achat d'un produit et/ou d'un service. Le dispositif d'interface homme-machine 10 permet par exemple à l'utilisateur de sélectionner un produit et/ou un service qu'il souhaite acheter.

Le dispositif d'interface homme-machine 10 comprend par exemple un dispositif d'affichage d'images, un dispositif de pointage pour la sélection de champs et/ou de boutons dans une interface graphique utilisateur, un clavier alphanumérique pour la saisie de caractères alphanumériques et/ou un ou plusieurs boutons physiques. Le dispositif d'affichage d'images est par exemple un écran, notamment un écran tactile pour permettre de pointer et/ou de saisir des données directement sur l'écran.

Chaque borne de paiement 4 comprend un dispositif de paiement 12 permettant à un utilisateur de payer un produit et/ou un service par l'intermédiaire de la borne de paiement 4.

Le dispositif de paiement 12 comprend par exemple un terminal de paiement électronique configuré pour le paiement par carte de paiement, notamment par carte bancaire ou privative, un sélecteur de monnaie configuré pour le paiement avec une ou plusieurs pièces de monnaie, un lecteur de billet de banque configuré pour le paiement avec un ou plusieurs billets de banques, un terminal de paiement sans contact configuré pour le paiement avec un dispositif électronique (carte à puce, ordiphone...) avec une communication sans contact entre le terminal de paiement sans contact et le dispositif électronique, par exemple par une communication en champs proche (ou NFC pour *« Near Field Communication* » en anglais), et/ou un dispositif d'impression pour l'impression d'un reçu, par exemple un ticket de stationnement ou un titre de transport.

Chaque borne de paiement 4 est configurée pour échanger des données avec le système informatique 6 pour la réalisation d'une transaction relative à l'achat d'un produit et/ou d'un service par un utilisateur par l'intermédiaire de la borne de paiement 4.

Chaque borne de paiement 4 comprend un dispositif de communication 14 par l'intermédiaire duquel la borne de paiement 4 est en communication avec le système informatique 6 par l'intermédiaire du réseau de communication 8.

Chaque borne de paiement 4 comprend un système d'alerte 16 porté par la borne de paiement 4 et configuré pour permettre à un piéton de générer et d'envoyer un message d'alerte au système informatique 6.

Le système d'alerte 16 est utilisable indépendamment de l'achat d'un produit et/ou d'un service à l'aide de la borne de paiement 4.

Le système d'alerte 16 comprend un dispositif d'interface d'alerte 18 configuré pour permettre à un piéton d'interagir avec la borne de paiement 4 pour générer un message d'alerte.

Le dispositif d'interface d'alerte 18 comprend un ou plusieurs élément(s) d'interface actionnables par le piéton pour générer un message d'alerte.

Le dispositif d'interface d'alerte 18 comprend par exemple un organe d'alerte mobile 20 actionnable manuellement par un piéton pour générer un message d'alerte. L'organe d'alerte mobile 20 est par exemple un bouton-poussoir, un bouton basculant, un levier, une manette à tirer... Dans un mode de réalisation particulier, l'organe d'alerte mobile 20 est un bouton-poussoir.

En variante ou en option, le dispositif d'interface d'alerte 18 comprend un écran tactile 22 configuré pour afficher une interface graphique utilisateur permettant à un piéton de générer un message d'alerte.

En option, le système d'alerte 16 comprend un dispositif de capture 24 configuré pour capturer du son et/ou des images.

Le dispositif de capture 24 permet par exemple d'enregistrer un contenu audio qui peut être attaché au message d'alerte et/ou de mettre le piéton en communication audio avec le système informatique 6 et/ou avec un opérateur.

Le dispositif de capture 24 permet par exemple d'enregistrer un contenu vidéo qui peut être attaché à un message d'alerte et/ou de mettre le piéton en communication vidéo avec le système informatique 6 et/ou avec un opérateur.

En option, le système d'alerte 16 comprend un module d'analyse 26 configuré pour analyser du son et/ou des images capturés par le dispositif de capture 24. Le module d'analyse 26 est par exemple configuré pour calculer une empreinte vocale, pour analyser la voix de la personne utilisant le système d'alerte 16, pour calculer une empreinte faciale, pour calculer une empreinte rétinienne et/ou pour analyser le comportement d'une ou plusieurs personnes sur des images.

L'analyse de la voix sur un enregistrement audio et/ou l'analyse comportementale sur des images permet par exemple d'estimer si la personne est effectivement en situation de stress du fait des évènements la conduisant à générer un message d'alerte.

En option, le système d'alerte 16 comprend un dispositif d'appel d'urgence 32 configuré pour établir une communication audio et/ou vidéo entre la borne de paiement 4 et un opérateur distant.

La borne de paiement 4 est ainsi configurée pour servir également de borne d'appel d'urgence, permettant de mettre la personne générant le message d'alerte en contact avec un opérateur.

L'appel de l'opérateur est par exemple effectué par l'intermédiaire du système informatique 6 et du réseau de communication 8. Le dispositif d'appel d'urgence 32 est par exemple configuré pour utiliser les sons et/ou les images capturés par le dispositif de capture 24.

En variante ou en option, le système d'alerte 16 comprend un module de biométrie 34 configuré pour le calcul de données biométriques, notamment relatives à une personne utilisant le système d'alerte 16.

Le module de biométrie 34 est configuré pour calculer une empreinte digitale, une empreinte palmaire, une empreinte faciale, une empreinte rétinienne et/ou une empreinte vocale.

Comme dans l'exemple illustré, le module de biométrie 34 peut utiliser des sons et/ou des images fournies par le dispositif de capture 24 pour calculer un ou plusieurs empreinte(s) parmi celles évoquées ci-dessus.

En variante ou en option, le module de biométrie 34 est associé à un ou plusieurs capteur(s) biométriques dédié(s) distinct(s) du dispositif de capture 24, par exemple un capteur d'empreinte digitale, un capteur d'empreinte palmaire, un capteur d'empreinte faciale, un capteur d'empreinte rétinienne et/ou un capteur d'empreinte vocale.

Les données biométriques capturées peuvent servir à identifier des personnes visibles sur des images ou dont la voix est présente sur des enregistrements sonores capturés par le système d'alerte 16 lors de l'utilisation de ce dernier.

En option, le système d'alerte 16 comprend un module d'identification 36 configuré pour l'identification d'une personne lors de l'utilisation du système d'alerte 16 par cette personne.

L'identification de la personne utilisant le système d'alerte 16 permet d'éviter des utilisations inappropriées du système d'alerte 16 pour générer de faux signaux d'alerte.

Le module d'identification 36 est par exemple configuré pour l'identification de la personne générant un signal d'alerte à partir de données fournies par le dispositif de capture 24 et/ou le module de biométrie 34.

Chaque borne de paiement 4 comprend en option un dispositif de diffusion d'alerte configuré pour l'émission d'un signal d'alerte visuel, sonore et/ou olfactif perceptible par des piétons ou des passagers de véhicules situés à proximité de la borne de paiement 4

Le dispositif de diffusion d'alerte comprend par exemple un générateur de signal 40 configuré pour générer un signal visuel, sonore et/ou olfactif perceptible par un piéton ou un passage d'un véhicule situé à proximité de la borne de paiement 4. Le générateur de signal 40 est porté par la borne de paiement 4.

Un générateur de signal 40 pour la génération d'un signal visuel est par exemple choisi parmi un gyrophare, un projecteur pour projeter une image sur une surface, un générateur d'hologramme, un écran d'affichage, une peinture électro-chromatique recouvrant la borne de paiement, et une pluralité de sources lumineuses.

Un générateur de signal pour la génération d'un signal sonore est par exemple choisi parmi un haut-parleur et une sirène.

Un générateur de signal pour la génération d'un signal olfactif est par exemple un diffuseur de parfum.

De préférence, le générateur de signal 40 est distinct du dispositif d'interface homme-machine 10 et du dispositif de paiement 12.

Chaque borne de paiement 4 comprend en option un dispositif de communication 42 configuré pour envoyer le message d'alerte par voie radioélectrique ou optique, de sorte que le message d'alerte puisse être reçu par un appareil électronique d'un piéton, d'un passager de véhicule ou d'un véhicule situé à proximité de la borne de paiement 4.

Le dispositif de communication 42 configuré pour établir une liaison de communication avec au moins un appareil électronique 44 d'un piéton, d'un passager de véhicule ou d'un véhicule situé à proximité de la borne de paiement 4.

Une « liaison de communication » désigne ici une communication dans laquelle le dispositif de communication 42 et l'appareil électronique 44 communiquent directement l'un avec l'autre par la liaison de communication, sans passer par l'intermédiaire d'un réseau de télécommunication ou d'un équipement de télécommunication. Les signaux émis par le dispositif de communication 42 sont directement reçus par l'appareil électronique 44 et vice-versa.

Le dispositif de communication 42 est par exemple configuré pour une radiocommunication, par exemple selon un protocole de communication Bluetooth®, WIFI®, Lora, Beacon, Sygfox, Zigbee, Z-Wave, ANT+, Dust, NFC, et/ou pour une communication optique sans fil, par exemple selon la technologie IRDA, Li-Fi...

Un appareil électronique 44 d'un piéton ou d'un passager d'un véhicule est par exemple un ordiphone, une tablette numérique ou une montre électronique. Un appareil électronique 44 d'un véhicule est par exemple un système d'info-divertissement embarqué.

Chaque borne de paiement 4 comprend un module d'envoi de message 46 configuré pour envoyer un message d'alerte au système informatique 6 lorsque l'un piéton utilise le système d'alerte 16 de la borne de paiement 4.

Le module d'envoi de message 46 est configuré pour inclure dans le message d'alerte un identifiant de la borne de paiement 4. Cet identifiant peut permettre d'identifier la borne de paiement 4 à partir de laquelle le message d'alerte 4 a été envoyé, et donc le lieu d'où provient le message d'alerte. Une équipe de la sécurité civile peut alors être envoyée directement à cette borne de paiement 4.

Le module d'envoi de message 46 est en option configuré pour inclure dans le message d'alerte un contenu audio, un contenu vidéo et/ou des données biométriques fournis par le dispositif de capture 24 et/ou le module de biométrie 34.

Lorsque la borne de paiement 4 comprend un dispositif d'appel d'urgence 32, le message d'alerte émis par la borne de paiement 4 et reçu par le système informatique 6 permet de déclencher l'établissement de la communication audio et/ou vidéo avec un opérateur distant.

Le serveur informatique 6 comprend un module de diffusion 48 configuré pour transmettre un message d'alerte provenant d'une borne de paiement 4 à un ou plusieurs destinataires prédéterminés.

Les destinataires prédéterminés sont des destinataires susceptibles d'intervenir suite au message d'alerte et/ou des destinataires pouvant alerter les personnes situées à proximité de la borne de paiement 4 d'où provient le message d'alerte, par exemple afin qu'elles soient vigilantes.

Le module de diffusion 48 est par exemple configuré pour diffuser le message d'alerte vers un ou plusieurs fournisseur(s) de données de trafic routier 50 transmettant des données de trafic routier à des dispositifs électroniques embarqués 52 dans des véhicules 54.

Des données de trafic routier comprennent par exemple la localisation de bouchons, la présence de travaux, la présence de radars, le passage d'un véhicule prioritaire, la vitesse maximale autorisée...

Chaque fournisseur de données trafic routier 50 diffuse par exemple les données de trafic routier par l'intermédiaire d'un signal radio émis vers les véhicules équipés d'un dispositif électronique embarqué 52 propre à capter ce signal radio, par exemple un récepteur de géolocalisation.

Chaque fournisseur de données de trafic routier 50 peut par exemple diffuser le message d'alerte aux véhicules abonnés au service de ce fournisseur de données de trafic routier 50, afin de les avertir de l'alerte émise et pour les inciter à la vigilance.

En option ou en variante, le module de diffusion 48 est configuré pour diffuser le message d'alerte vers un ou plusieurs organisme(s) 56 de sécurité civile en charge de la sécurité publique, des secours et/ou de la circulation.

En option ou en variante, le module de diffusion 48 est configuré pour transmettre le message d'alerte à une ou plusieurs borne(s) de paiement 4 parmi les autres bornes de paiement 4 du système de gestion 2, pour la génération, par chaque borne de paiement 4 destinataire du message d'alerte, d'un signal d'alerte visuel, sonore et/ou olfactif par le générateur de signal 40 de cette ou de ces borne(s) de paiement (4), et/ou pour la diffusion, par chaque borne de paiement 4 destinataire du message d'alerte, du message d'alerte vers des appareils électroniques 44 de piétons ou de véhicules présents à proximité de cette ou de ces borne(s) de paiement 4 via le dispositif de communication 42 de cette ou de ces borne(s) de paiement 4. Les bornes de paiement 4 peuvent ainsi être utilisées comme système de diffusion d'alerte vers les piétons et/ou les véhicules situés à proximité des bornes de paiement 4.

Chacun du module d'analyse 26, du module de biométrie 34, du module d'identification 36, du module d'envoi de message 46 et/ou du module de diffusion 48 est par exemple un module logiciel enregistré dans une mémoire informatique et exécutable par un processeur, la mémoire informatique et le processeur appartenant à une unité de traitement de données.

Dans l'exemple illustré, le module d'analyse 26, le module de biométrie 34, le module d'identification 36 et le module d'envoi de message 46 sont des modules logiciels enregistrés dans une mémoire 60 et exécuté par un processeur 62 d'une unité de traitement de données 64 de la borne de paiement 4. Le module de diffusion 48 est un module logiciel enregistré dans une mémoire 66 et exécuté par un processeur 68 d'une unité de traitement de données 70 du système informatique 6.

En variante, au moins du module d'analyse 26, du module de biométrie 34, du module d'identification 36, du module d'envoi de message 46 et du module de diffusion 48 est prévu sous la forme d'un circuit intégré dédié ou d'un composant logique programmable.

Par ailleurs, dans l'exemple illustré, un module d'analyse 26, un module de biométrie 34 et un module d'identification 36 sont présents dans chaque borne de paiement 4.

En variante, le module d'analyse 26, le module de biométrie 34 et/ou le module d'identification 36 est(sont) localisé(s) dans le système informatique 6. Ceci permet de traiter des sons, des images et des données biométriques capturées par plusieurs bornes de paiement 4 de manière centralisée au niveau du système informatique 6. Ceci peut faciliter par exemple la maintenance des bornes de paiement 4 dans le cas où une mise à jour d'un de ces modules serait nécessaire, car la mise n'a pas à être effectuée dans chaque borne de paiement 4.

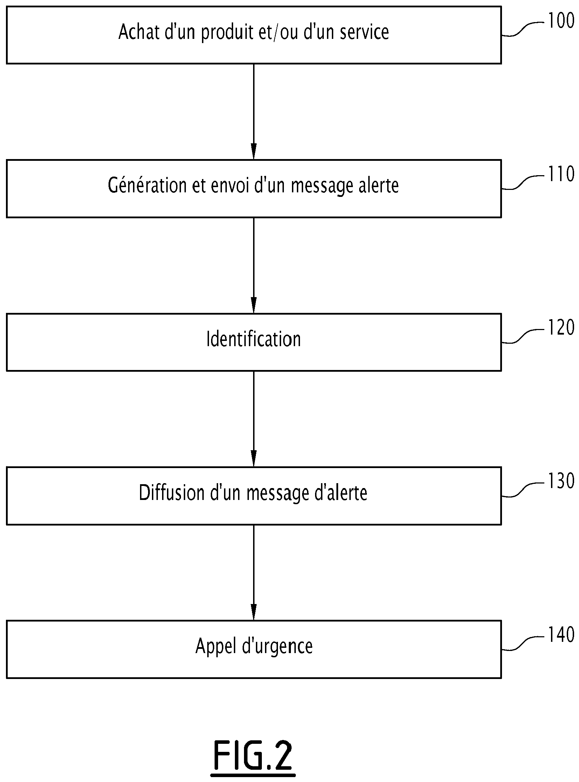

Le fonctionnement du système de gestion 2 va maintenant être décrit en référence à la Figure 2 représentant un organigramme d'un procédé de diffusion d'alerte.

Dans une étape de paiement 100, un utilisateur utilise une borne de paiement 4 du système de gestion 2 pour acheter un produit et/ou un service. Les données nécessaires à la réalisation de la transaction sont enregistrées localement dans la borne de paiement 4 et/ou dans le système informatique 6. Si nécessaire, pour la réalisation de la transaction, la borne de paiement 4 communique avec le système informatique 6 pour échanger des données, via le réseau de communication 8 du système de gestion 2.

Dans une étape d'alerte 110, un piéton témoin ou victime d'un évènement utilise le système d'alerte 16 de la borne de paiement 4 pour générer un message d'alerte. La borne de paiement 4 génère le message d'alerte et l'envoi automatiquement au système informatique 6.

Dans une étape optionnelle d'identification 120, le piéton utilisant le système d'alerte 16 de la borne de paiement est identifié, par exemple à l'aide du dispositif de capture 24 et/ou du module de biométrie 34.

Dans une étape de diffusion 130, le système informatique 6 transmet, de préférence automatiquement, le message d'alerte à un ou plusieurs destinataires prédéterminés, par exemple un ou plusieurs fournisseurs 50 de données de trafic routier, un ou plusieurs organisme 56 de sécurité civile et une ou plusieurs bornes de paiement 4.

Lorsque le message d'alerte est transmis à d'autres bornes de paiement 4, ces dernières diffuse le message d'alerte à l'aide de leurs dispositifs de communication 42 respectifs.

Dans une étape optionnelle d'appel 140, le piéton est mis en communication audio et/ou vidéo avec un opérateur distant, afin par exemple de données des informations sur l'alerte.

Dans l'exemple illustré, l'étape d'identification est réalisée après l'étape d'envoi du message d'alerte au système informatique 6. En variante, elle peut être réalisée avant.

Par ailleurs, dans l'exemple illustré, l'étape d'appel est réalisée après l'étape d'identification et l'étape de diffusion. En variante, l'étape d'appel est réalisée avant une étape d'identification et/ou avant une étape de diffusion.

Les bornes de paiement 4 pour l'achat d'un produit et/ou d'un service, situées en voirie et connectées à un système informatique 6, peuvent constituer un support efficace pour la génération et l'envoi d'un message d'alerte par des piétons témoins ou victimes d'un événement.

Les bornes de paiement 4 peuvent être réparties géographiquement selon un maillage relativement dense de sorte qu'un piéton peut trouver rapidement une borne de paiement 4.

Les bornes de paiement 4 disposent déjà de l'infrastructure nécessaire pour la communication avec le système informatique 6 et pour leur alimentation en énergie électrique.

Le système informatique 6 auquel sont reliées les bornes de paiement 4 permet de diffuser rapidement et efficacement le message d'alerte vers des destinataires prédéterminés.

Les bornes de paiement 4 situées à proximité d'une borne de paiement utilisée pour générer un message d'alerte peuvent en outre servir de borne d'avertissement pour générer un signal d'alerte perceptible par les piétons à proximité de la borne de paiement 4 et/ou diffusé localement vers des appareils électroniques situés à proximité des bornes de paiement.

## Revendications

1. Borne de paiement (4) disposée en voirie et utilisable en libre-service pour l'achat d'un produit et/ou d'un service, la borne de paiement (4) étant configurée pour être reliée à un système informatique (6) distant relié à plusieurs bornes de paiement (4) analogues d'un système de gestion (2) d'un produit et/ou d'un service, la borne de paiement (4) comprenant un système d'alerte (16) configuré pour permettre à un piéton de générer un message d'alerte, le borne de paiement (4) étant configurée pour envoyer le message d'alerte au système informatique (6).

2. Borne de paiement selon la revendication 1, dans laquelle le système d'alerte (16) comprend un organe d'alerte (20) actionnable manuellement par un piéton pour générer un message d'alerte.

3. Borne de paiement selon la revendication 1 ou la revendication 2, dans laquelle le système d'alerte (16) comprend un écran tactile (22) utilisable par un piéton pour générer un message d'alerte.

4. Borne de paiement selon l'une quelconque des revendications précédentes, dans laquelle le système d'alerte (16) comprend un dispositif de capture (24) propre à capturer des sons, la borne de paiement (4) étant configurée pour attacher un contenu audio au message d'alerte et/ou pour établir une communication audio avec un opérateur distant.

5. Borne de paiement selon l'une quelconque des revendications précédentes, dans laquelle le système d'alerte (16) comprend un dispositif de capture (24) propre à capturer des images, la borne de paiement (4) étant configurée pour attacher un contenu vidéo au message d'alerte et/ou pour établir une communication vidéo avec un opérateur distant.

6. Borne de paiement selon l'une quelconque des revendications précédentes, dans laquelle le système d'alerte (16) comprend un module de biométrie (34), la borne de paiement (4) étant configurée pour déterminer des données biométrique, et pour attacher des données biométriques au message d'alerte et/pour identifier un piéton utilisant le système d'alerte (16).

7. Borne de paiement selon l'une quelconque des revendications précédentes, comprenant un générateur de signal (40) configuré pour l'émission d'un signal d'alerte visuel, sonore et/ou olfactif perceptible par des piétons et/ou des passagers de véhicules à proximité de la borne de paiement (4).

8. Borne de paiement selon l'une quelconque des revendications précédentes, comprenant un dispositif communication (42) configuré pour la diffusion du message d'alerte vers des appareils électroniques de piéton, de passagers de véhicules et/ou de véhicules situés à proximité de la borne de paiement (4), via une liaison de communication radio ou optique.

9. Système de gestion (2) d'un produit et/ou d'un service, comprenant une pluralité de bornes de paiement (4) selon l'une quelconque des revendications précédentes, un système informatique (6) en communication avec chaque borne de paiement (4), le système informatique (6) étant configuré pour diffuser chaque message d'alerte envoyé par une borne de paiement (4) vers un ou plusieurs destinataire(s) prédéterminé(s).

10. Système de gestion selon la revendication 9, dans lequel le ou les destinataire(s) prédéterminé(s) est ou comprennent : un ou plusieurs fournisseurs de données de trafic routier, une ou plusieurs organisme de sécurité civile et/ou une ou plusieurs borne(s) de paiement (4) parmi les autres bornes de paiement (4) du système de gestion (2).
